# EUROPEAN PATENT APPLICATION

(11) **EP 4 560 866 A1**
(43) Date of publication of application: **28.05.2025**
(21) Application number: 22956019.8
(22) Date of filing: 24.08.2022
(51) Int. Cl.: H02J 3/28, H02J 7/00

(54) **CONTROL METHOD AND CONTROL APPARATUS FOR ENERGY STORAGE SYSTEM**

(71) Applicant: Contemporary Amperex Technology Co., Limited, Fujian 352100 (CN)
(72) Inventor: ZHANG, Miaomiao, Ningde City, Fujian 352100 (CN); SHI, Mingzhang, Ningde City, Fujian 352100 (CN); FENG, Zuoju, Ningde City, Fujian 352100 (CN)
(74) Representative: Gong, Jinping
(86) International application number: PCT/CN2022/114513
(87) International publication number: WO 2024/040470

(57) **Abstract**

Embodiments of the present application provide a control method and a control device of an energy storage system. The energy storage system is coupled to an energy generation system and a power grid. The energy storage system includes a plurality of energy storage units. The method includes: acquiring discharging power information of the energy generation system, charging power information of the power grid and state information of the energy storage system, the state information of the energy storage system including time information of the energy storage units in a preset depth of discharge (DOD) interval; and determining an energy management strategy of the energy storage system according to the discharging power information of the energy generation system, the charging power information of the power grid and the state information of the energy storage system. According to the control method and the control device of an energy storage system provided by the embodiments of the present application, energy management of the energy storage system can be reasonably performed, the performance of the energy storage system can be improved, and the service life of the energy storage system can be prolonged.

## Description

### TECHNICAL FIELD

The present application relates to the technical field of energy storage, and in particular relates to a control method and a control device of an energy storage system.

### BACKGROUND

With rapid development of the new energy industry, a large number of renewable energy systems such as wind power, photovoltaic power and the like are connected to a power grid. Due to large power fluctuation of the renewable energy system, dramatic voltage and frequency fluctuation of the power grid is caused, and stability of the power grid is influenced.

By connecting the renewable energy system to an energy storage system, the fluctuation generated by output power can be effectively alleviated. When energy output by the renewable energy system is too large, the renewable energy system is controlled to charge the energy storage system, avoiding energy waste. If energy generated by the renewable energy system is insufficient, the energy storage system is controlled to discharge to the power grid so as to ensure smooth total power output. In the ordinary charging-discharging mode of the energy storage system, power distribution depends on the magnitude of state of charge (SOC), and all batteries in the energy storage system are charged or discharged in each charging or discharging process. However, the above charging mode has an effect on the performance and the service life of the energy storage system.

### SUMMARY

Embodiments of the present application provide a control method and a control device of an energy storage system, which can reasonably perform energy management of the energy storage system, and improve the performance of the energy storage system, and prolong the service life of the energy storage system.

In a first aspect, a method for controlling an energy storage system is provided. The energy storage system is coupled to an energy generation system and a power grid, and the energy storage system comprises a plurality of energy storage units; the method comprises: acquiring discharging power information of the energy generation system, charging power information of the power grid and state information of the energy storage system, wherein the state information of the energy storage system comprises time information of the energy storage units in a preset depth of discharge (DOD) interval; and determining an energy management strategy of the energy storage system according to the discharging power information of the energy generation system, the discharging power information of the power grid and the state information of the energy storage system.

In the control solution of the energy storage system provided by the embodiment of the present application, the discharging power information of the energy generation system, the charging power information of the power grid, and the state information of the energy storage system comprising time information of the energy storage units in a preset DOD interval are comprehensively taken into account, therefore, the energy management strategy of the energy storage system can be more reasonably determined, and energy management of the energy storage system can be flexibly performed, thereby improving the performance of the energy storage system and prolonging the service life of the energy storage system.

In a possible embodiment, the determining an energy management strategy of the energy storage system comprises: when the discharging power of the energy generation system is greater than the charging power of the power grid and a first energy storage unit is present in the energy storage system, charging the first energy storage unit, wherein the first energy storage unit is an energy storage unit with a time duration in the preset DOD interval greater than or equal to a preset time.

In the control solution of the energy storage system provided by the embodiment of the present application, when the energy storage system is charged, it is preferential to charge the energy storage unit with a longer time duration in the preset DOD interval, thus avoiding SOC inaccuracy caused by that the energy storage unit stays longer in the DOD interval, preventing overcharge or over discharge caused by SOC inaccuracy, improving the performance of the energy storage system and prolonging the service life of the energy storage system.

In a possible embodiment, the determining an energy management strategy of the energy storage system comprises: when the discharging power of the energy generation system is greater than the charging power of the power grid and a second energy storage unit is present in the energy storage system, charging the second energy storage unit, wherein the second energy storage unit is an energy storage unit with a state of charge (SOC) less than or equal to a first charging threshold except for the first energy storage unit, and a charging priority of the second energy storage unit is lower than that of the first energy storage unit.

In the control solution of the energy storage system provided by the embodiment of the present application, SOC of the energy storage units is further considered. In case of charging other energy storage units except for the first energy storage unit with a longer time duration in the DOD interval, it is preferential to charge the energy storage units with relatively less SOC so as to ensure preferential charging of the energy storage units with less SOC, avoid over discharge of the energy storage units with less SOC, improve the performance of the energy storage system and prolong the service life of the energy storage system.

In a possible embodiment, the determining an energy management strategy of the energy storage system comprises: when the discharging power of the energy generation system is greater than the charging power of the power grid and a third energy storage unit is present in the energy storage system, charging the third energy storage unit, wherein the third energy storage unit is an energy storage with an SOC less than or equal to a second charging threshold except for the first energy storage unit and the second energy storage unit, the second charging threshold is greater than the first charging threshold, and a charging priority of the third energy storage unit is lower than that of the first energy storage unit or the second energy storage unit.

In the control solution of the energy storage system provided by the embodiment of the present application, according to the time duration of the energy storage units in the preset DOD interval and SOC of the energy storage units, the energy generation system can be controlled to charge the energy storage units according to a certain priority sequence, such that the energy storage system can be reasonably charged, overcharge of over discharge of the energy storage units resulted from SOC inaccuracy of the energy storage units is avoided, the charging frequency of the energy storage units is reduced to some extent, the performance of the energy storage system is improved and the service life of the energy storage system is prolonged.

In a possible embodiment, the determining an energy management strategy of the energy storage system comprises:
when the discharging power of the energy generation system is less than the charging power of the power grid and a fourth energy storage unit is present in the energy storage system, discharging the fourth energy storage unit, wherein the fourth energy storage unit is an energy storage unit with a time duration in the preset DOD interval greater than or equal to the preset time.

In the control solution of the energy storage system provided by the embodiment of the present application, it is preferential to discharge the energy storage units with a longer time duration in the DOD interval when the energy storage system is controlled to discharge to the power grid, thus avoiding SOC inaccuracy caused by that the energy storage units stay longer in the DOD interval, thus preventing overcharge or over discharge of the energy storage units caused by SOC inaccuracy, improving the performance of the energy storage system and prolonging the service life of the energy storage system.

In a possible embodiment, the determining an energy management strategy of the energy storage system comprises: when the discharging power of the energy generation system is less than the charging power of the power grid and a fifth energy storage unit is present in the energy storage system, discharging the fifth energy storage unit, wherein the fifth energy storage unit is an energy storage unit with an SOC greater than or equal to a first discharging threshold except for the fourth energy storage unit, and the discharging priority of the fifth energy storage unit is lower than that of the fourth energy storage unit.

In the control solution of the energy storage system provided by the embodiment of the present application, SOC of the energy storage units is further considered. In case of discharging other energy storage units except for the energy storage unit with a longer time duration in the DOD interval, it is preferential to discharge the energy storage units with relatively greater SOC so as to ensure preferential discharging of the energy storage units with greater SOC, avoid overcharge of the energy storage units with greater SOC, improve the performance of the energy storage system and prolong the service life of the energy storage system.

In a possible embodiment, the determining an energy management strategy of the energy storage system comprises:
when the discharging power of the energy generation system is less than the charging power of the power grid and a sixth energy storage unit is present in the energy storage system, discharging the sixth energy storage unit, wherein the sixth energy storage unit is an energy storage unit with an SOC greater than or equal to a second discharging threshold except for the fourth energy storage unit and the fifth energy storage unit, the second discharging threshold is less than the first discharging threshold, and the discharging priority of the sixth energy storage unit is lower than that of the fourth energy storage unit or the fifth energy storage unit.

In the control solution of the energy storage system provided by the embodiment of the present application, according to the time information of the energy storage units in the preset DOD interval and SOC information of the energy storage units, the energy storage units can be controlled to discharge to the power grid according to a certain priority sequence, such that the energy storage system can be reasonably discharged, overcharge of over discharge of the energy storage units resulted from SOC inaccuracy of the energy storage units is avoided, the discharging frequency of the energy storage units is reduced to some extent, the performance of the energy storage system is improved and the service life of the energy storage system is prolonged.

In a possible embodiment, the determining an energy management strategy of the energy storage system comprises: when an undervoltage energy storage unit is present in the energy storage system, charging the undervoltage energy storage unit, wherein the charging priority of the undervoltage energy storage unit is higher than that of the power grid or a non-undervoltage energy storage unit in the energy storage system, and the SOC of the undervoltage energy storage unit is less than or equal to an undervoltage threshold.

In the control solution of the energy storage system provided by the embodiment of the present application, when an undervoltage energy storage unit is present in the energy storage system, it is preferential to charge the undervoltage energy storage unit, such that over discharge of the undervoltage energy storage unit is avoided, the performance of the energy storage system is improved and the service life of the energy storage system is prolonged.

In a second aspect, a control device is provided. The control device is coupled to an energy storage system, the energy storage system is coupled to an energy generation system and a power grid, and the energy storage system comprises a plurality of energy storage units; the control device comprises: an acquiring unit, configured to acquire discharging power information of the energy generation system, charging power information of the power grid and state information of the energy storage system, the state information of the energy storage system comprising time information of the energy storage units in a preset depth of discharge (DOD) interval; and a control unit, configured to determine an energy management strategy of the energy storage system according to the discharging power information of the energy generation system, the charging power information of the power grid and the state information of the energy storage system.

In a possible embodiment, the control unit is specifically configured to: when the discharging power of the energy generation system is greater than the charging power of the power grid and a first energy storage unit is present in the energy storage system, charge the first energy storage unit, wherein the first energy storage unit is an energy storage unit with a time duration in the preset DOD interval greater than or equal to a preset time.

In a possible embodiment, the control unit is specifically configured to: when the discharging power of the energy generation system is greater than the charging power of the power grid and a second energy storage unit is present in the energy storage system, charge the second energy storage unit, wherein the second energy storage unit is an energy storage unit with a state of charge (SOC) less than or equal to a first charging threshold except for the first energy storage unit, and a charging priority of the second energy storage unit is lower than that of the first energy storage unit.

In a possible embodiment, the control unit is specifically configured to: when the discharging power of the energy generation system is greater than the charging power of the power grid and a third energy storage unit is present in the energy storage system, charge the third energy storage unit, wherein the third energy storage unit is an energy storage with an SOC less than or equal to a second charging threshold except for the first energy storage unit and the second energy storage unit, the second charging threshold is greater than the first charging threshold, and the charging priority of the third energy storage unit is lower than that of the first energy storage unit or the second energy storage unit.

In a possible embodiment, the control unit is specifically configured to: when the discharging power of the energy generation system is less than the charging power of the power grid and a fourth energy storage unit is present in the energy storage system, discharge the fourth energy storage unit, wherein the fourth energy storage unit is an energy storage unit with a time duration in the preset DOD interval greater than or equal to the preset time.

In a possible embodiment, the control unit is specifically configured to: when the discharging power of the energy generation system is less than the charging power of the power grid and a fifth energy storage unit is present in the energy storage system, discharge the fifth energy storage unit, wherein the fifth energy storage unit is an energy storage unit with an SOC greater than or equal to a first discharging threshold except for the fourth energy storage unit, and the discharging priority of the fifth energy storage unit is lower than that of the fourth energy storage unit.

In a possible embodiment, the control unit is specifically configured to: when the discharging power of the energy generation system is less than the charging power of the power grid and a sixth energy storage unit is present in the energy storage system, discharge the sixth energy storage unit, wherein the sixth energy storage unit is an energy storage unit with an SOC greater than or equal to a second discharging threshold except for the fourth energy storage unit and the fifth energy storage unit, the second discharging threshold is less than the first discharging threshold, and the discharging priority of the sixth energy storage unit is lower than that of the fourth energy storage unit or the fifth energy storage unit.

In a possible embodiment, the control unit is specifically configured to: when an undervoltage energy storage unit is present in the energy storage system, charge the undervoltage energy storage unit, wherein the charging priority of the undervoltage energy storage unit is higher than that of the power grid or a non-undervoltage energy storage unit in the energy storage system, and the SOC of the undervoltage energy storage unit is less than or equal to an undervoltage threshold.

In a third aspect, an energy storage system is provided. The energy storage system is coupled to an energy generation system and a power grid, and the energy storage system comprises a plurality of energy storage units and the control device according to the above second aspect or any of the possible embodiments of the second aspect.

In a fourth aspect, a control device of an energy storage system is provided. The control device comprises a memory and a processor, the memory is configured to store an instruction, and the processor is configured to read the instruction and perform the method according to the first aspect or any of the possible embodiments of the first aspect according to the instruction.

In a fifth aspect, a chip is provided. The chip comprises a processor configured to invoke and run a computer program from a memory, such that the apparatus equipped with the chip is enabled to perform the method according to the first aspect or any of the possible embodiments of the first aspect.

In a sixth aspect, a computer program is provided, wherein the computer program is executed by a computer so as to enable the computer to perform the method according to the first aspect or any of the possible embodiments of the first aspect.

In a seventh aspect, a computer-readable storage medium is provided, wherein the computer-readable storage medium is configured to store a computer program, and a computer is enabled to perform the method according to the first aspect or any of the possible embodiments of the first aspect when the computer program is executed by the computer.

In an eighth aspect, a computer program product is provided, which comprises a computer program instruction, and a computer is enabled to perform the method according to the first aspect or any of the possible embodiments of the first aspect when the computer program instruction is executed by the computer.

### BRIEF DESCRIPTION OF THE DRAWINGS

Fig.1 is a schematic architecture diagram of an application scenario of an energy storage system to which an embodiment of the present application is applicable.
Fig.2 is a schematic architecture diagram of an optical storage direct current (DC) coupling system to which an embodiment of the present application is applicable.
Fig.3 is a schematic flow diagram of a method for controlling the energy storage system shown in an embodiment of the present application.
Fig.4 is a schematic flow diagram of the method for controlling the energy storage system shown in an embodiment of the present application.
Fig.5 is a schematic flow diagram of the method for controlling the energy storage system shown in an embodiment of the present application.
Fig.6 is a schematic block diagram of a control device of the energy storage system shown in an embodiment of the present application.
Fig.7 is another schematic block diagram of the control device of the energy storage system shown in an embodiment of the present application.

### DESCRIPTION OF EMBODIMENTS

The embodiments of the present application are further described in detail below in conjunction with the accompanying drawings and the embodiments. The following detailed description of the embodiments and the accompanying drawings serve to illustratively describe the principles of the present application, but are not intended to limit the scope of the present application, i.e., the present application is not limited to the described embodiments.

Unless otherwise defined, all the technical and scientific terms used herein have the same meanings as being commonly understood by those skilled in the art of the present application. Terms used in the description of the present application are for the purpose of describing specific embodiments only and are not intended to limit the present application. The terms "including" and "having" and any variations thereof in the description and claims as well as the drawings of the present application are intended to cover a non-exclusive inclusion. The terms "first", "second", and so on in the description and claims or accompanying drawings of the present application are intended to distinguish different objects, but not to describe particular sequences or primary-secondary relationship.

The nouns of locality mentioned below refer to the directions shown in the drawings, rather than limitations to the specific structure of the present application. In the description of the present invention, unless otherwise clearly stipulated, the terms "link", "connect" and the like should be understood in a broad sense, e.g., fixed connection, detachable connection or integral connection; or direct connection, or indirect connection via a medium. For those of ordinary skill in the art, its particular meanings can be understood depending on the particular contexts.

The "embodiment" mentioned in the present application means that particular features, structures, or characteristics described in conjunction with the embodiments may be included in at least one embodiment of the present application. The occurrence of "embodiment" in various positions in the description does not necessarily refer to the same embodiment, nor is it a separate or alternative embodiment that is mutually exclusive to other embodiments. It can be explicitly and implicitly understood by those skilled in the art that, the embodiments described herein may be combined with other embodiments.

In the embodiment of the present application, the circumstance that A charges B can be understood as that A outputs power to B, or A discharges to B. That is, A is an output end/discharge end, and B is an input end/charge end.

At current, with rapid development of new energy, a large number of renewable resources such as wind power, photovoltaic power and the like are connected to a power grid. Due to large power fluctuation of the renewable energy system, dramatic voltage and frequency fluctuation of the power grid is caused, and stability of the power grid is influenced.

By connecting the renewable energy system to an energy storage system, the fluctuation generated by output power can be effectively alleviated. When energy output by the renewable energy system is too large, the renewable energy system is controlled to charge the energy storage system, avoiding energy waste. If the energy generated by the renewable energy system is insufficient, the energy storage system is controlled to discharge to the power grid so as to ensure smooth total power output. At current, in the ordinary charging-discharging mode of the energy storage system, power distribution depends on the magnitude of state of charge (SOC), and all batteries in the energy storage system are charged or discharged in each charging or discharging process, therefore, the performance and service life of the energy storage system can be influenced.

In view of the above, the present application proposes a control solution of the energy storage system, which can determine an energy management strategy of the energy storage system according to the discharging power information of the energy generation system, the charging power information of the power grid and the state information of the energy storage system, wherein the state information of the energy storage system comprises time information of the energy storage units in a preset depth of discharge (DOD) interval. By comprehensively considering the discharging power information of the renewable energy system, the charging power information of the power grid and the state information of the energy storage system comprising the time information of the energy storage units in the preset DOD interval, the energy management strategy of the energy storage system can be more reasonably determined, and charging and discharging energy management of the energy storage system can be flexibly performed, thereby improving the performance of the energy storage system and prolonging the service life of the energy storage system.

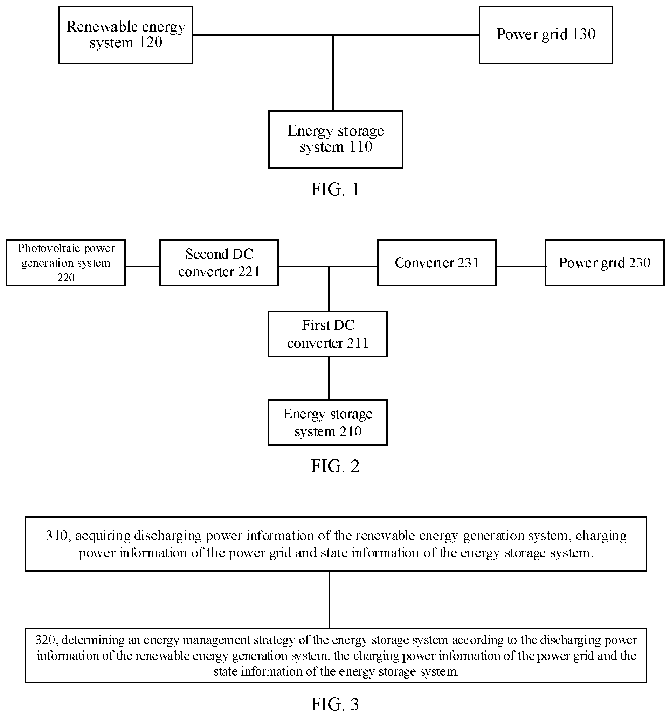

Fig.1 is a schematic architecture diagram of an application scenario of an energy storage system to which an embodiment of the present application is applicable.

As shown in Fig.1, the energy storage system 110 is connected with an energy generation system 120. Optionally, the energy storage system 110 can be also connected with a power grid 130.

The energy generation system 120 is capable of converting solar energy, wind energy, nuclear energy or the like into electric energy, the energy storage system 110 stores electric energy therein, and both the energy generation system 120 and the energy storage system 110 are connected with the power grid 130 so as to output power to the power grid 130. Optionally, it may be that the energy generation system 120 separately outputs power to the power grid 130, the energy storage system 110 separately outputs power to the power grid 130, or both the energy storage system 110 and the energy generation system 120 output power to the power grid 130 together.

In the embodiment of the present application, the energy generation system 120 and the power grid 130 can also output power to the energy storage system 110. Optionally, it may be that the energy generation system 120 separately outputs power to the energy storage system 110, the power grid 130 separately outputs power to the energy storage system 110, or both the energy generation system 120 and the power grid 130 output power to the energy storage system 110 together.

In the embodiment of the present application, the energy storage system 110 can comprise a plurality of energy storage units. Optionally, each energy storage unit comprises at least one battery and is provided with a battery management system (BMS) for monitoring battery information, such as SOC, temperature, electric current and the like, and performing real-time information interaction with a senior energy management system (EMS) or a power convert system (PCS) so as to achieve energy management of the whole energy storage system.

Optionally, in the embodiment of the present application, the energy generation system 120 can be a renewable energy system such as a wind power generation system, a solar power generation system or a tidal power generation system. Optionally, the energy generation system 120 may be a nuclear power generation system, a thermal power generation system, or a hydroelectric power generation system. For example, the energy generation system 120 may be a photovoltaic power generation system. For another example, the energy generation system 120 may be a power generation system combining the wind power generation system and the thermal power generation system. The power generation form of the energy generation system 120 is not limited in the present application.

Optionally, in the embodiment of the present application, the power grid 130 may be a power distribution network or a regional power grid, which is not limited in the present application.

Optionally, in the embodiment of the present application, the power grid 130 can be replaced with a user-side electric device which is unable to output power to the energy storage system 110. Optionally, the user-side electric device can receive the power output from the energy storage system 110 and/or the energy generation system 120. Optionally, the energy storage system 110 can receive the power output from the energy generation system 120.

It should be understood that, in the embodiment of the present application, the energy storage system is connected with the energy generation system, the energy storage system is connected with the power grid, and the energy generation system is connected with the power grid. It can be also understood as that the energy storage system is coupled with the energy generation system, the energy storage system is coupled with the power grid, and the energy generation system is coupled with the power grid.

Fig.2 is a schematic architecture diagram of an optical storage direct current (DC) coupling system to which an embodiment of the present application is applicable. The application scenario of the energy storage system when the energy generation system is a photovoltaic power generation system will be illustratively introduced below in conjunction with Fig.2. In Fig.2, the photovoltaic power generation system 220 can be the energy generation system 120 in Fig.1, and the energy storage system 210 can be the energy storage system 110 in Fig.1.

In a possible embodiment of the present application, the energy storage system 210 is connected with one end of a first direct current (DC) converter 211, the other end of the first DC converter 211 is connected with one end of a second DC converter 221 and one end of a converter 231 such as a bidirectional inverter, the other end of the second DC converter 221 is connected with the photovoltaic power generation system 220, and the other end of the converter 231 is connected with the power grid 230.

In a possible embodiment of the present application, the output power of the second DC converter 221 is provided by the photovoltaic power generation system 220, and the second DC converter 221 can control the magnitude of the output power of the photovoltaic power generation system 220. The output power of the first DC converter 211 is provided by the energy storage system 210. The converter 231 can receive the power output from the first DC converter 211 and the second DC converter 221. Optionally, the first DC converter 211 can receive the power output from the second DC converter 221 and the converter 231.

In a possible embodiment of the present application, the energy storage system 210, the photovoltaic power generation system 220, and the power grid 230 can be connected through a converter module. The power grid 230 can receive the output power of the energy storage system 210 and the photovoltaic power generation system 220 through the converter module. Optionally, the energy storage system 210 can receive the power output from the photovoltaic power generation system 220 and the power grid 230 through the converter module.

In a possible embodiment of the present application, the energy storage system 210 includes a plurality of energy storage units, and the charging and discharging power of each energy storage unit can be the smaller one between the allowable charging and discharging power of the energy storage unit and the allowable charging and discharging power of the first DC converter 211. The charging power at a grid side 230 can be the smaller one between the allowable charging power at the grid side distributed by the EMS and the allowable charging power of the converter 231. The discharging power at the grid side can be the smallest one among the allowable discharging power at the grid side distributed by the EMS, the allowable discharging power of the converter 231, and the charging power of the energy storage system 210.

It should be understood that the allowable charging power of the converter 231 can be understood as the power allowed by the converter when outputting power to the power grid 230. Similarly, the allowable discharging power of the converter 231 can be understood as the power allowed by the converter 231 when the power grid 230 outputs power to the energy storage system 210.

Fig.3 is a schematic flow diagram of a method for controlling the energy storage system shown in an embodiment of the present application.

The energy storage system can be either the energy storage system 110 in Fig.1 or the energy storage system 210 in Fig.2. An exemplary introduction about a method for controlling the energy storage system provided in the embodiment of the present application will be provided by coupling the energy storage system to the renewable energy system.

310, acquiring discharging power information of the renewable energy generation system, charging power information of the power grid and state information of the energy storage system.

The energy storage system is coupled to the renewable energy system and the power grid, which can be understood as that the energy storage system is connected with the renewable energy system and the power grid. Optionally, through the connection between the energy storage system and the renewable energy system, the renewable energy system can output power to the energy storage system, that is, the renewable energy system can charge the energy storage system. Optionally, through the connection between the energy storage system and the power grid, the energy storage system can output power to the power grid or the power grid can output power to the energy storage system, that is, the energy storage system can discharge to the power grid or the power grid can charge the energy storage system.

The energy storage system includes a plurality of energy storage units. Optionally, the renewable energy system can output power to the energy storage units, that is, the renewable energy system can charge the energy storage units. Optionally, the energy storage units can output power to the power grid, that is, the energy storage units can charge the power grid. Optionally, the power grid can output power to the energy storage units, that is, the power grid can charge the energy storage units.

Optionally, in the embodiment of the present application, the state information of the energy storage system includes time information of the energy storage units within a preset depth of discharge (DOD) interval.

Optionally, in the embodiment of the present application, the energy storage unit can be charged and discharged within the preset DOD interval which can be set within the range of the fully discharged (fully discharged) state and the fully charged (fully charged) state of the energy storage unit. The SOC value of the energy storage unit in the fully discharged state is SOCₘᵢₙ, and the SOC value in the fully charged state is SOCₘₐₓ. The lower limit of the preset DOD interval is SOC_{Dmin}, and the upper limit of the preset DOD interval is SOC_{Dmax}. Therefore, SOCₘᵢₙ≤SOC_{Dmin}< SOC_{Dmax}≤SOCₘₐₓ.

320, determining an energy management strategy of the energy storage system according to the discharging power information of the renewable energy generation system, the charging power information of the power grid and the state information of the energy storage system.

In the control solution of the energy storage system provided by the embodiment of the present application, an energy management strategy of the energy storage system is determined according to the discharging power information of the renewable energy system, the charging power information of the power grid and the state information of the energy storage system comprising the time information of the energy storage units in the preset DOD interval. In the solution of the present application, by comprehensively considering the discharging power information of the renewable energy system, the charging power information of the power grid and the state information of the energy storage system comprising the time information of the energy storage units in the preset DOD interval, the energy management strategy of the energy storage system can be more reasonably determined, and energy management of the energy storage system can be flexibly performed, thereby improving the performance of the energy storage system and prolonging the service life of the energy storage system.

Optionally, in the embodiment of the present application, when the discharging power of the renewable energy system is greater than or equal to the charging power of the power grid, the renewable energy system is controlled to charge the energy storage system.

That is, in the embodiment of the present application, the renewable energy system can preferentially output power to the power grid, residual power of the renewable energy system can be output to the energy storage system.

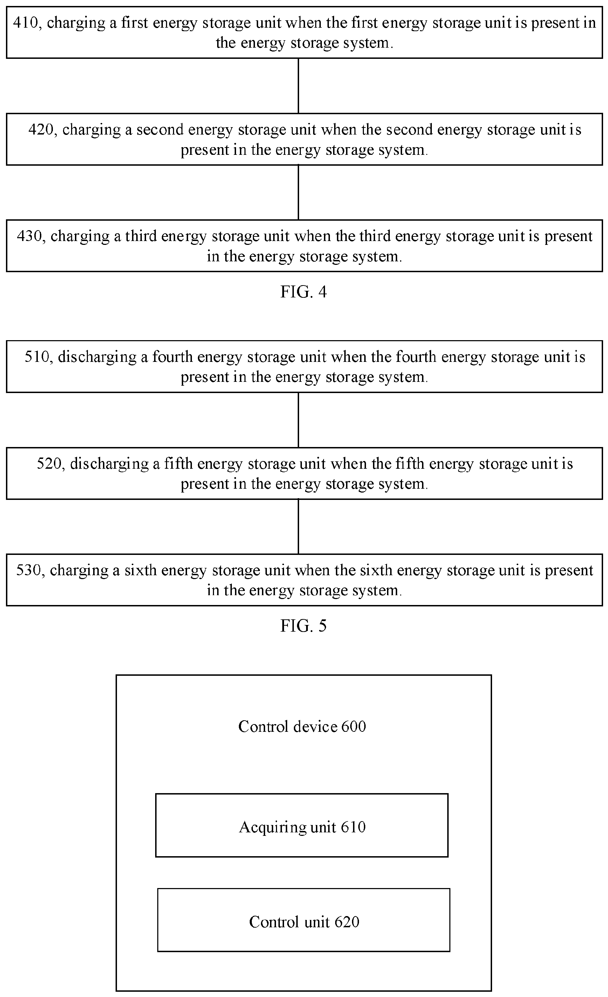

Fig.4 is a schematic flow diagram of the method for controlling the energy storage system shown in an embodiment of the present application. The method for controlling the renewable energy system to charge the energy storage system will be illustratively introduced in combination with Fig.4.

410, charging a first energy storage unit when the first energy storage unit is present in the energy storage system.

Optionally, in the embodiment of the present application, the first energy storage unit is an energy storage unit with a time duration in the preset DOD interval greater than or equal to a preset time.

The energy storage unit can be charged and discharged in the preset DOD interval, which can be set within the range of the fully discharged (fully discharged) state and the fully charged (fully charged) state of the energy storage unit. The SOC value of the energy storage unit in the fully discharged state is SOCₘᵢₙ, and the SOC value in the fully charged state is SOCₘₐₓ. The lower limit of the preset DOD interval is SOC_{Dmin}, and the upper limit of the preset DOD interval is SOC_{Dmax}. Therefore, SOCₘᵢₙ≤SOC_{Dmin}< SOC_{Dmax}≤SOCₘₐₓ.

If an energy storage unit is charged or discharged in the preset DOD interval for a long time, the inaccuracy of the SOC of the energy storage unit is easily caused, thereby leading to overcharge or over discharge of the energy storage unit due to inaccuracy of the SOC. Therefore, the renewable energy system can be used to charge the first energy storage unit that is charged or discharged in the preset DOD interval for a long time. When the renewable energy system has sufficient energy, the first energy storage unit is charged until it arrives in a fully charged state.

In the control solution of the energy storage system provided by the embodiment of the present application, in case of charging the energy storage system, it is preferential to charge the energy storage unit with a longer time duration in the preset DOD interval so as to avoid inaccuracy of the SOC caused by that the energy storage unit stays longer in the DOD interval, thereby avoiding overcharge or over discharge of the energy storage unit caused by inaccuracy of the SOC, improving the performance of the energy storage system and prolonging the service life of the energy storage system.

420, charging a second energy storage unit when the second energy storage unit is present in the energy storage system.

Optionally, in the embodiment of the present application, the second energy storage unit is an energy storage unit with an SOC less than or equal to a first charging threshold except for the first energy storage unit, and a charging priority of the second energy storage unit is lower than that of the first energy storage unit.

In the embodiment, the state information of the energy storage system further includes SOC information of the energy storage units.

The second energy storage unit can also be understood as an energy storage unit with a relatively less SOC value in other energy storage units except for the first energy storage unit in the energy storage system. The upper limit value of the SOC of the second energy storage unit depends on the magnitude of the first charging threshold. Optionally, in this embodiment, the first charging threshold SOC_{char1} can be set in the preset DOD interval, i.e., SOC_{Dmin} ≤ SOC_{charg1} ≤ SOC_{Dmax}. Optionally, in the embodiment, the first charging threshold SOC_{charg1} can be set outside the range of the preset DOD interval, i.e., SOC_{charg1}<SOC_{Dmin} or SOC_{charg1}>SOC_{Dmax}.

Optionally, in the embodiment, when the first energy storage unit and the second energy storage unit are present in the energy storage system, it is preferential to charge the first energy storage unit when the renewable energy system is controlled to charge the energy storage system. If there is residual power when the renewable energy system charges the first energy storage unit, the residual power is used to charge the second energy storage unit.

Optionally, in the embodiment, when the first energy storage unit is not present in the energy storage system and a second energy storage unit exists, it is preferential to charge the second energy storage unit when the renewable energy system is controlled to charge the energy storage system.

In the control solution of the energy storage system provided by the embodiment of the present application, SOC of the energy storage units is further considered. In case of charging other energy storage units except for the first energy storage unit with a longer time duration in the preset DOD interval, it is preferential to charge the energy storage units with relatively less SOC so as to ensure preferential charging of the energy storage units with less SOC, avoid over discharge of the energy storage units with less SOC, improve the performance of the energy storage system and prolong the service life of the energy storage system.

430, charging a third energy storage unit when the third energy storage unit is present in the energy storage system.

Optionally, in the embodiment of the present application, the third energy storage unit is an energy storage unit with an SOC less than or equal to a second charging threshold except for the first energy storage unit and the second energy storage unit, a second charging threshold is greater than the first charging threshold, and a charging priority of the third energy storage unit is lower than that of the first energy storage unit or the second energy storage unit.

When the SOC of an energy storage unit is less than or equal to the second charging threshold, the energy storage unit can be charged, and the energy storage unit that can be charged is called a chargeable energy storage unit. On the contrary, the energy storage unit cannot be charged. The third energy storage unit can also be understood as an energy storage unit with a greater SOC value in the chargeable energy storage unit in the energy storage system, except for the first energy storage unit.

Optionally, in the embodiment, in case that the first energy storage unit, the second energy storage unit and third energy storage unit are present in the energy storage system, it is preferential to charge the first energy storage unit, then the second energy storage unit and finally the third energy storage unit when the renewable energy system is controlled to charge the energy storage system. That is to say, in case of charging the first energy storage, if there is residual power in the renewable energy system, the residual power is used to charge the second energy storage system. In case of using the renewable energy system to charge the first and second energy storage systems, if there is residual power in the renewable energy system, the residual power is used to charge the third energy storage unit.

Optionally, in the embodiment, in case that the first energy storage unit and the third energy storage unit are present in the energy storage system but the second energy storage unit does not exist, it is preferential to charge the first energy storage unit, and then the third energy storage unit when the renewable energy system is controlled to charge the energy storage system. That is to say, in case of charging the first energy storage unit by use of the renewable energy system, if there is residual power in the renewable energy system, the residual power is used to charge the third energy storage unit.

Optionally, in the embodiment, in case that the second energy storage unit and the third energy storage system are present in the energy storage system but the first energy storage unit does not exist, when the renewable energy system is controlled to charge the energy storage system, it is preferential to charge the second energy storage unit, and then the third energy storage unit. That is to say, in case of preferentially charging the second energy storage unit by use of the renewable energy system, if there is residual power in the renewable energy system, the residual power is used to charge the third energy storage unit.

In the control solution of the energy storage system provided by the embodiment of the present application, by comprehensively considering the time information of the energy storage units in the preset DOD interval and SOC information of the energy storage units, the renewable energy system can be controlled to charge the energy storage units according to a certain priority sequence, such that the energy storage units can be reasonably charged, overcharge or over discharge of the energy storage units resulted from inaccuracy of the SOC of the energy storage units is avoided, the charging frequency of the energy storage units is reduced to some extent, the performance of the energy storage system is improved and the service life of the energy storage system is prolonged.

Optionally, in the embodiment of the present application, when the discharging power of the renewable energy system is less than the charging power of the power grid, the energy storage system is controlled to discharge to the power grid.

That is to say, in the embodiment, it is preferential to control the renewable energy system to output power to the power grid. When the output power of the renewable energy system cannot meet the demand of the power grid, the energy storage system can also be controlled to output power to the power grid, that is, the energy storage system is controlled to discharge to the power grid.

Fig.5 is a schematic flow diagram of the method for controlling the energy storage system shown in an embodiment of the present application. A method for controlling the energy storage system to discharge to the power grid is illustratively introduced below in combination with Fig.5.

510, discharging a fourth energy storage unit when the fourth energy storage unit is present in the energy storage system.

Optionally, in the embodiment of the present application, the fourth energy storage unit is an energy storage unit with a time duration in the preset DOD interval greater than or equal to a preset time.

The energy storage unit can be charged and discharged in the preset DOD interval which can be set within the range of the fully discharged (fully discharged) state and the fully charged (fully charged) state of the energy storage unit. The SOC value of the energy storage unit in the fully discharged state is SOCₘᵢₙ, and the SOC value in the fully charged state is SOCₘₐₓ. The lower limit of the preset DOD interval is SOC_{Dmin}, and the upper limit of the preset DOD interval is SOC_{Dmax}. Therefore, SOCₘᵢₙ≤SOC_{Dmin}< SOC_{Dmax}≤SOCₘₐₓ. If an energy storage unit is charged or discharged in the preset DOD interval for a long time, the inaccuracy of the SOC of the energy storage unit is easily caused, thereby leading to overcharge or over discharge of the energy storage unit due to inaccuracy of the SOC. Therefore, when the energy storage system is controlled to discharge to the power grid, it is preferential to discharge the fourth energy storage unit.

Optionally, in the embodiment, the fourth energy storage unit can be discharged until it arrives in a fully discharged state.

In the control solution of the energy storage system provided by the embodiment of the present application, it is preferential to discharge the energy storage units with a longer time duration in the preset DOD interval when the energy storage system is controlled to discharge to the power grid so as to avoid inaccuracy of the SOC caused by that the energy storage units stay longer in the preset DOD interval, thus preventing overcharge or over discharge caused by inaccuracy of the SOC, improving the performance of the energy storage system and prolonging the service life of the energy storage system.

S520, discharging a fifth energy storage unit when the fifth energy storage unit is present in the energy storage system.

Optionally, in the embodiment of the present application, the fifth energy storage unit, is an energy storage unit with an SOC greater than or equal to a first discharging threshold except for the fourth energy storage unit, and a charging priority of the fifth energy storage unit is lower than that of the fourth energy storage unit.

The fifth energy storage unit can also be understood as an energy storage unit with a relatively greater SOC value except for the fourth energy storage unit in the energy storage system. The lower limit value of the SOC of the fifth energy storage unit depends on the magnitude of the first discharging threshold. Optionally, the first discharging threshold SOC_{Dischar1} can be set within the preset DOD interval, i.e., SOC_{Dmin} ≤ SOC_{Dischar1}≤ SOC_{Dmax}. Optionally, the first discharging threshold can be set outside the range of the preset DOD interval, i.e., SOC_{Dischar1}<SOC_{Dmin} or SOC_{Dischar1}>SOC_{Dmax}.

Optionally, in the embodiment, in case that the fourth energy storage unit and the fifth energy storage unit are present in the energy storage system, it is preferential to control the fourth energy storage unit to discharge to the power grid and then the fifth energy storage unit to discharge to the power grid when the energy storge system is discharged. In other words, when the fourth energy storage unit is controlled to discharge to the power grid, if the discharging power of the renewable energy system and the fourth energy storage unit cannot meet the demand of the charging power of the power grid, the fifth energy storage unit is further controlled to discharge to the power grid.

Optionally, in the embodiment, in case that the fourth energy storage unit is not present in the energy storage system but the fifth energy storage unit exists, it is preferential to control the fifth energy storage unit to discharge to the power grid when the energy storage system is controlled to discharge to the power grid.

In the control solution of the energy storage system provided by the embodiment of the present application, SOC of the energy storage units is further considered. In case of discharging other energy storage units except for the energy storage unit with a longer time duration in the preset DOD interval in the energy storage system, it is preferential to discharge the energy storage units with greater SOC so as to ensure preferential discharging of the energy storage units with greater SOC, avoid over discharge of the energy storage units with greater SOC, improve the performance of the energy storage system and prolong the service life of the energy storage system.

530, charging a sixth energy storage unit when the sixth energy storage unit is present in the energy storage system.

Optionally, in the embodiment of the present application, the sixth energy storage unit is an energy storage unit with an SOC greater than or equal to a second discharging threshold except for the fourth energy storage unit and the fifth energy storage, the second discharging threshold is less than the first discharging threshold and a charging priority of the sixth energy storage unit is lower than that of the fourth energy storage unit or the fifth energy storage unit.

When the SOC of an energy storage unit is greater than or equal to the second discharging threshold, the energy storage unit can be discharged, and the energy storage unit that can be discharged is called a dischargeable energy storage unit. On the contrary, the energy storage unit cannot be discharged. The sixth energy storage unit can also be understood as an energy storage unit with a less SOC value in the dischargeable energy storage units in the energy storage system, except for the fourth energy storage unit.

Optionally, in the embodiment, in case that the fourth energy storage unit, the fifth energy storage unit and sixth energy storage unit are present in the energy storage system, it is preferential to control the fourth energy storage unit to discharge, then the fifth energy storage unit to discharge and finally the sixth energy storage unit to discharge when the energy storage system is controlled to discharge to the power grid. That is to say, in case of controlling the fourth energy storage unit to discharge to the power grid, if the discharging power of the renewable energy system and the fourth energy storage system cannot meet the demand of the charging power of the power grid, the fifth energy storage unit is further controlled to discharge to the power grid. In case of controlling the fourth energy storage unit and the fifth energy storage unit to discharge to the power grid, if the discharging power of the renewable energy system, the fourth energy storage unit and the fifth energy storage unit cannot meet the demand of the charging power of the power grid, the sixth energy storage unit is further controlled to discharge to the power grid.

Optionally, in the embodiment, in case that the fourth energy storage unit and the sixth energy storage system are present in the energy storage system but the fifth energy storage unit does not exist, it is preferential to control the fourth energy storage unit to discharge to the power grid, and then the sixth energy storage unit to discharge to the power grid when the energy storage system is controlled to discharge to the power grid. In other words, in case of controlling the fourth energy storage unit to discharge to the power grid, if the discharging power of the renewable energy system and the fourth energy storage unit cannot meet the demand of the charging power of the power grid, the sixth energy storage unit is further controlled to discharge to the power grid.

Optionally, in the embodiment, in case that the fifth energy storage unit and the sixth energy storage unit are present in the energy storage system but the fourth energy storage unit does not exist, when the energy storage system is controlled to discharge to the power grid, it is preferential to control the fifth energy storage unit to discharge to the power grid, and then the sixth energy storage unit to discharge to the power grid. In other words, in case of controlling the fifth energy storage unit to discharge to the power grid, if the discharging power of the renewable energy system and the fifth energy storage unit cannot meet the demand of the charging power of the power grid, the sixth energy storage unit is further controlled to discharge to the power grid.

In the embodiment of the present application, when the renewable energy system is controlled to charge the energy storage system, the time information of the energy storage units in the preset DOD interval and SOC information of the energy storage units are comprehensively taken into account, so that the energy storage units in the energy storage system can be controlled to discharge to the power grid according to a certain priority sequence, therefore, the energy storage system can be reasonably discharged, over discharge of the energy storage units resulted from inaccuracy of the SOC of the energy storage units is avoided, discharging frequency of the energy storage units is reduced to some extent, the performance of the energy storage system is improved and the service life of the energy storage system is prolonged.

Optionally, in the embodiment of the present application, in case that an undervoltage energy storage unit is present in the energy storage system, the undervoltage energy storage unit is charged, wherein a charging priority of the undervoltage energy storage unit is higher than that of the power grid or a non-undervoltage energy storage unit in the energy storage system, and the SOC of the undervoltage energy storage unit is less than or equal to an undervoltage threshold.

As the SOC of the undervoltage energy storage unit is less than the undervoltage threshold, the voltage of the energy storage unit is lower than a rated voltage. If the undervoltage energy storage unit continues to discharge, it will cause over discharge of the energy storage unit, thereby affecting the performance and service life of the energy storage system.

Therefore, when undervoltage energy storage units are present in the energy storage system, it is preferential to charge the undervoltage energy storage units. The undervoltage energy storage units can be charged by using the renewable energy system, the dischargeable energy storage units in the energy storage system, or the power grid. The SOC of the dischargeable energy storage unit in the energy storage system is greater than or equal to a certain preset threshold. For example, the SOC of a dischargeable energy storage unit is greater than or equal to the second discharging threshold mentioned above.

Optionally, in the embodiment of the present application, the SOC of the undervoltage energy storage unit is less than or equal to a first undervoltage threshold. When the SOC of some energy storage unit in the energy storage system is less than or equal to the first undervoltage threshold, the energy storage unit is an undervoltage energy storage unit, and the undervoltage energy storage unit is preferentially charged. The undervoltage energy storage unit can be charged by using the renewable energy system, the dischargeable energy storage unit, or the power grid.

Optionally, in the embodiment of the present application, the undervoltage energy storage unit is an energy storage unit with a provided voltage less than or equal to the rated voltage.

Optionally, in the embodiment of the present application, in case of charging an undervoltage energy storage unit by using the renewable energy system or the dischargeable energy storage unit, the SOC of the undervoltage energy storage unit is less than or equal to the first undervoltage threshold; or, in case of charging an undervoltage energy storage unit by using the power grid, the SOC of the undervoltage energy storage unit is less than or equal to a second undervoltage threshold, and the second undervoltage threshold is less than the first undervoltage threshold.

If the SOC of some energy storage unit is less than or equal to the first undervoltage threshold and greater than the second undervoltage threshold, the energy storage unit can be charged by using the renewable energy system or the dischargeable energy storage unit, but cannot be charged by using the power grid. If the SOC of some energy storage unit is less than or equal to the second undervoltage threshold, the energy storage unit can be charged by using the renewable energy system, the dischargeable energy storage unit, or the power grid.

That is to say, in the embodiment, only the undervoltage energy storage unit with less SOC can be charged by using the power grid. At the time of charging the undervoltage energy storage unit, the economic factors of charging are considered, which not only ensures the performance and service life of the energy storage system but also minimizes the charging cost of the undervoltage energy storage unit as much as possible.

It should be understood that in the various embodiments of the present application, the serial number of each process does not mean the sequence of execution, and the execution sequence of each process should be determined by the function and the internal logic, and should not make any limitation to the implementation process of the embodiments of the present application.

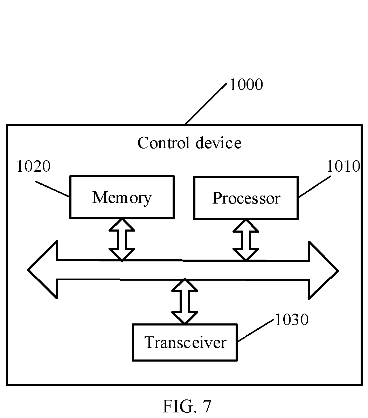

The method for controlling the energy storage system in the embodiment of the present application has been described in detail above. The control device of the embodiment of the present application will be described in detail below in conjunction with Figs. 6 and 7. The technical features described in the method embodiment are applicable to the following device embodiments.

Fig.6 illustrates a schematic block diagram of the control device 600 according to an embodiment of the present application. Wherein, the control device is coupled to the energy storage system, the energy storage system is coupled to the energy generation system and the power grid, and the energy storage system includes a plurality of energy storage units. As shown in Fig.6, the control device includes a part or all of the following contents.

An acquiring unit 610 is configured to acquire discharging power information of the energy generation system, charging power information of the power grid and state information of the energy storage system, wherein the state information of the energy storage system comprises time information of the energy storage units in a preset depth of discharge (DOD) interval.

A control unit 620 is configured to determine an energy management strategy of the energy storage system according to the discharging power information of the energy generation system, the charging power information of the power grid and the state information of the energy storage system.

Optionally, in the embodiment of the present application, the control unit is specifically configured to: when the discharging power of the energy generation system is greater than the charging power of the power grid and a first energy storage unit is present in the energy storage system, charge the first energy storage unit, wherein the first energy storage unit is an energy storage unit with a time duration in the preset DOD interval greater than or equal to a preset time.

Optionally, in the embodiment of the present application, the control unit is specifically configured to: when the discharging power of the energy generation system is greater than the charging power of the power grid and a second energy storage unit is present in the energy storage system, charge the second energy storage unit, wherein the second energy storage unit is an energy storage unit with a state of charge (SOC) less than or equal to a first charging threshold except for the first energy storage unit, and a charging priority of the second energy storage unit is lower than that of the first energy storage unit.

Optionally, in the embodiment of the present application, the control unit is specifically configured to: when the discharging power of the energy generation system is greater than the charging power of the power grid and a third energy storage unit is present in the energy storage system, charge the third energy storage unit, wherein the third energy storage unit is an energy storage unit with an SOC less than or equal to a second charging threshold except for the first energy storage unit and the second energy storage unit, the second charging threshold is greater than the first charging threshold, and a charging priority of the third energy storage unit is lower than that of the first energy storage unit or the second energy storage unit.

Optionally, in the embodiment of the present application, the control unit is specifically configured to: when the discharging power of the energy generation system is less than the charging power of the power grid and a fourth energy storage unit is present in the energy storage system, discharge the fourth energy storage unit, wherein the fourth energy storage unit is an energy storage unit with a time duration in the preset DOD interval greater than or equal to the preset time.

Optionally, in the embodiment of the present application, the control unit is specifically configured to: when the discharging power of the energy generation system is less than the charging power of the power grid and a fifth energy storage unit is present in the energy storage system, discharge the fifth energy storage unit, wherein the fifth energy storage unit is an energy storage unit with an SOC greater than or equal to a first discharging threshold except for the fourth energy storage unit, and a discharging priority of the fifth energy storage unit is lower than that of the fourth energy storage unit.

Optionally, in the embodiment of the present application, the control unit is specifically configured to: when the discharging power of the energy generation system is less than the charging power of the power grid and a sixth energy storage unit is present in the energy storage system, discharge the sixth energy storage unit, wherein the sixth energy storage unit is an energy storage unit with an SOC greater than or equal to a second discharging threshold except for the fourth energy storage unit and the fifth energy storage unit, the second discharging threshold is less than the first discharging threshold, and a discharging priority of the sixth energy storage unit is lower than that of the fourth energy storage unit or the fifth energy storage unit.

Optionally, in the embodiment of the present application, the control unit is specifically configured to: when an undervoltage energy storage unit is present in the energy storage system, charge the undervoltage energy storage unit, wherein a charging priority of the undervoltage energy storage unit is higher than that of the power grid or a non-undervoltage energy storage unit in the energy storage system, and the SOC of the undervoltage energy storage unit is less than or equal to an undervoltage threshold.

It should be understood that the above and other operations and/or functions of each module in the control device 600 of the energy storage system are corresponding processes for achieving the methods in Figs.3-5, which will be not repeated for the sake of simplicity.

Optionally, embodiments of the present application further provide an energy storage system. The energy storage system is coupled to an energy generation system and a power grid, and the energy storage system includes a plurality of energy storage units and the control device 600 provided by the above embodiments. The control device is configured to determine an energy management strategy of the energy storage system.

Fig.7 illustrates a schematic block diagram of the control device 1000 of the energy storage system according to an embodiment of the present application. As shown in Fig.7, the control device 1000 includes a processor 1010 and a memory 1020, wherein the memory 1020 is configured to store instructions, and the processor 1010 is configured to read instructions and execute the methods of various embodiments of the present application based on the instructions.

Wherein, the memory 1020 can be a separate device independent of the processor 1010 or integrated into the processor 1010.

Optionally, as shown in Fig.7, the control device 1000 of the energy storage system may also include a transceiver 1030, and the processor 1010 can control the transceiver 1030 to communicate with other devices. Specifically, information or data can be sent to or received from other devices.

It should be understood that the processor of the embodiment of the present application may be an integrated circuit chip with signal processing capabilities. In the implementation process, each step of the above method embodiment can be completed by the integrated logic circuit of hardware in the processor or instructions in the form of software. The above-mentioned processors can be general-purpose processors, digital signal processors (DSPs), application specific integrated circuits (ASICs), field programmable gate arrays (FPGAs) or other programmable logic devices, discrete gates or transistor logic devices, or discrete hardware components. The processor may implement or execute the methods, steps and logic block diagrams disclosed according to the embodiments of the present application. The general-purpose processor may be a microprocessor or any conventional processor, or the like. The steps of the method disclosed in the embodiment of the present application can be directly reflected in completing execution of a hardware decoding processor, or combined execution of hardware and software modules in a decoding processor. The software modules may be located in a mature storage medium of the field, such as an RAM, a flash memory, an ROM, a programmable ROM or an erasable programmable memory and a register. The storage medium is located in the memory, and the processor reads the information in the memory and completes the steps of the above method in combination with its hardware.

It should be understood that the memory in the embodiment of the present application can be a volatile memory or a non-volatile memory, or can include both volatile and non-volatile memories. Wherein, the non-volatile memory can be a read-only memory (ROM), a programmable read-only memory (PROM), an erasable programmable read-only memory (EPROM), an electrically erasable programmable read-only memory (EEPROM), or a flash memory. The volatile memory can be a random-access memory (RAM), which is used as an external cache. By way of exemplary but not limited explanation, many forms of RAM are available, such as a static random-access memory (SRAM), a dynamic random-access memory (DRAM), a synchronous dynamic random-access memory (SDRAM), a double data rate synchronous dynamic random-access memory (DDR SDRAM), an enhanced synchronous dynamic random-access memory (ESDRAM), a synchlink dynamic random-access memory (SLDRAM) and a direct rambus random-access memory (DR RAM). It should be noted that, the memory of the systems and methods described in the text is intended to include but not be limited to these and any other suitable types of memory.

Embodiments of the present application further provide a computer-readable medium, configured to store computer programs.

Optionally, the computer-readable storage medium can be applied to the control device of the energy storage system in the embodiment of the present application, and when the computer program runs on a computer, the computer is enabled to execute the corresponding processes implemented by the control device in the various methods of the embodiments of the present application, which will not be repeated for the sake of simplicity.

Embodiments of the present application further provide a computer program product, including computer program instructions.

Optionally, the computer program product can be applied to the control device of the energy storage system in the embodiment of the present application, and when the computer program instruction runs on a computer, the computer is enabled to execute the corresponding processes implemented by the control device of the energy storage system in various methods of the embodiment of the present application, which will not be repeated for the sake of simplicity.

Embodiments of the present application further provide a computer program.

Optionally, the computer program can be applied to the control device of the energy storage system in the embodiment of the present application. When the computer program runs on a computer, the computer is enabled to execute the corresponding processes implemented by the control device of the energy storage system in the various methods of the embodiment of the present application, which will not be repeated for the sake of simplicity.

Those of ordinary skill in the art can realize that the unit and algorithm step described in conjunction with the embodiments disclosed herein, can be implemented by an electronic hardware, or a combination of computer software and electronic hardware. Whether these functions are performed in the form of hardware or software depends on specific application and design constraint conditions of the technical solution. An ordinary skilled person in the art can implement the described function by different methods for every specific application, but such implementations should not be regarded as exceeding the scope of the present application. Whether these functions are performed in the form of hardware or software depends on specific application and design constraint conditions of the technical scheme. A professional person may implement the described functions of each specific application in different ways, but such an implementation should not be interpreted as a departure from the scope of the present application.

Those skilled in the art can clearly understand that, as for the specific operation processes of the system, device and unit, the corresponding processes in the above method embodiments can be referred to, which will not be repeated for the sake of convenience and simplicity in description.

In several embodiments provided by the present application, it should be understood that the disclosed system, device and method can be implemented by other ways. For example, the device embodiments described above are only illustrative. For example, the division of units is only a logical function division. In actual implementation, there may be other division methods. For example, multiple units or components may be combined or integrated into another system, or some features may be omitted, or not implemented. Besides, the shown or discussed mutual coupling or direct coupling or communication connection may be implemented through some interfaces, and indirect coupling or communication connection of devices or units may be in an electrical form, a mechanical form or other forms.

The units described as separate components may or may not be physically separated, and the components displayed as units may or may not be physical units, i.e., they may be located in one place, or they may be distributed on multiple network units. A part or all of the units can be selected to realize the object of the embodiment of the present application in accordance with actual requirements.

In addition, each functional unit in each embodiment of the present application may be integrated in a processing unit, or each unit separately exists may in a physical sense, or two or more units are integrated into one unit.

The function, if implemented in the form of a software function unit and sold or used as an independent product, can be stored in a computer-readable storage medium. Based on the understanding, the technical solution as far as its essence or the portion contributive to the prior art or a portion of the technical solution of the present application can be reflected in the form of a software product, the computer software product is stored in a storage medium, a number of instructions are included to enable a computer device (which may be a personal computer, a server, or a network device, etc.) to perform all or part of the methods described in each embodiment of the present application. The storage medium includes any medium that can store program codes, such as a U disk, a removable hard disk, an ROM, an RAM, a disk or an optic disk.

The above is merely the specific embodiments of the present application, but the protection scope of the present application is not limited thereto. Any variation or substitution conceived by those skilled in the art who are familiar with this field, should be covered by the protection scope of the present application. Therefore, the claims should prevail over the protection scope of the present application.

## Claims

1. A method for controlling an energy storage system, wherein the energy storage system is coupled to an energy generation system and a power grid, and the energy storage system comprises a plurality of energy storage units; the method comprises:
acquiring discharging power information of the energy generation system, charging power information of the power grid and state information of the energy storage system, the state information of the energy storage system comprising time information of the energy storage units in a preset depth of discharge (DOD) interval; and
determining an energy management strategy of the energy storage system according to the discharging power information of the energy generation system, the charging power information of the power grid and the state information of the energy storage system.

2. The method according to claim 1, wherein the determining an energy management strategy of the energy storage system comprises:
when the discharging power of the energy generation system is greater than the charging power of the power grid and a first energy storage unit is present in the energy storage system, charging the first energy storage unit, wherein the first energy storage unit is an energy storage unit with a time duration in the preset **DOD** interval greater than or equal to a preset time.

3. The method according to claim 2, wherein the determining an energy management strategy of the energy storage system comprises:
when the discharging power of the energy generation system is greater than the charging power of the power grid and a second energy storage unit is present in the energy storage system, charging the second energy storage unit, wherein the second energy storage unit is an energy storage unit with a state of charge (SOC) less than or equal to a first charging threshold except for the first energy storage unit, and a charging priority of the second energy storage unit is lower than that of the first energy storage unit.

4. The method according to claim 3, wherein the determining an energy management strategy of the energy storage system comprises:
when the discharging power of the energy generation system is greater than the charging power of the power grid and a third energy storage unit is present in the energy storage system, charging the third energy storage unit, wherein the third energy storage unit is an energy storage unit with an SOC less than or equal to a second charging threshold except for the first energy storage unit and the second energy storage unit, the second charging threshold is greater than the first charging threshold, and a charging priority of the third energy storage unit is lower than that of the first energy storage unit or the second energy storage unit.

5. The method according to any one of claims 1 to 4, wherein the determining an energy management strategy of the energy storage system comprises:
when the discharging power of the energy generation system is less than the charging power of the power grid and a fourth energy storage unit is present in the energy storage system, discharging the fourth energy storage unit, wherein the fourth energy storage unit is an energy storage unit with a time duration in the preset DOD interval greater than or equal to the preset time.

6. The method according to claim 5, wherein the determining an energy management strategy of the energy storage system comprises:
when the discharging power of the energy generation system is less than the charging power of the power grid and a fifth energy storage unit is present in the energy storage system, discharging the fifth energy storage unit, wherein the fifth energy storage unit is an energy storage unit with an SOC greater than or equal to a first discharging threshold except for the fourth energy storage unit, and a discharging priority of the fifth energy storage unit is lower than that of the fourth energy storage unit.

7. The method according to claim 6, wherein the determining an energy management strategy of the energy storage system comprises:
when the discharging power of the energy generation system is less than the charging power of the power grid and a sixth energy storage unit is present in the energy storage system, discharging the sixth energy storage unit, wherein the sixth energy storage unit is an energy storage unit with an SOC greater than or equal to a second discharging threshold except for the fourth energy storage unit and the fifth energy storage unit, the second discharging threshold is less than the first discharging threshold, and a discharging priority of the sixth energy storage unit is lower than that of the fourth energy storage unit or the fifth energy storage unit.

8. The method according to any one of claims 1 to 7, wherein the determining an energy management strategy of the energy storage system comprises:
when an undervoltage energy storage unit is present in the energy storage system, charging the undervoltage energy storage unit, wherein a charging priority of the undervoltage energy storage unit is higher than that of the power grid or a non-undervoltage energy storage unit in the energy storage system, and the SOC of the undervoltage energy storage unit is less than or equal to an undervoltage threshold.

9. A control device, wherein the control device is coupled to an energy storage system, the energy storage system is coupled to an energy generation system and a power grid, and the energy storage system comprises a plurality of energy storage units; the device comprises:
an acquiring unit, configured to acquire discharging power information of the energy generation system, charging power information of the power grid and state information of the energy storage system, the state information of the energy storage system comprising time information of the energy storage units in a preset depth of discharge (DOD) interval; and
a control unit, configured to determine an energy management strategy of the energy storage system according to the discharging power information of the energy generation system, the charging power information of the power grid and the state information of the energy storage system.

10. The control device according to claim 9, wherein the control unit is specifically configured to:
when the discharging power of the energy generation system is greater than the charging power of the power grid and a first energy storage unit is present in the energy storage system, charge the first energy storage unit, wherein the first energy storage unit is an energy storage unit with a time duration in the preset DOD interval greater than or equal to a preset time.

11. The control device according to claim 10, wherein the control unit is specifically configured to:
when the discharging power of the energy generation system is greater than the charging power of the power grid and a second energy storage unit is present in the energy storage system, charge the second energy storage unit, wherein the second energy storage unit is an energy storage unit with a state of charge (SOC) less than or equal to a first charging threshold except for the first energy storage unit, and a charging priority of the second energy storage unit is lower than that of the first energy storage unit.

12. The control device according to claim 11, wherein the control unit is specifically configured to:
when the discharging power of the energy generation system is greater than the charging power of the power grid and a third energy storage unit is present in the energy storage system, charge the third energy storage unit, wherein the third energy storage unit is an energy storage unit with an SOC less than or equal to a second charging threshold except for the first energy storage unit and the second energy storage unit, the second charging threshold is greater than the first charging threshold, and a charging priority of the third energy storage unit is lower than that of the first energy storage unit or the second energy storage unit.

13. The control device according to any one of claims 9 to 12, wherein the control unit is specifically configured to:
when the discharging power of the energy generation system is less than the charging power of the power grid and a fourth energy storage unit is present in the energy storage system, discharging the fourth energy storage unit, wherein the fourth energy storage unit is an energy storage unit with a time duration in the preset DOD interval greater than or equal to the preset time.

14. The control device according to claim 13, wherein the control unit is specifically configured to:
when the discharging power of the energy generation system is less than the charging power of the power grid and a fifth energy storage unit is present in the energy storage system, discharging the fifth energy storage unit, wherein the fifth energy storage unit is an energy storage unit with an SOC greater than or equal to a first discharging threshold except for the fourth energy storage unit, and a discharging priority of the fifth energy storage unit is lower than that of the fourth energy storage unit.

15. The control device according to claim 14, wherein the control unit is specifically configured to:
when the discharging power of the energy generation system is less than the charging power of the power grid and a sixth energy storage unit is present in the energy storage system, discharge the sixth energy storage unit, wherein the sixth energy storage unit is an energy storage unit with an SOC greater than or equal to a second discharging threshold except for the fourth energy storage unit and the fifth energy storage unit, the second discharging threshold is less than the first discharging threshold, and a discharging priority of the sixth energy storage unit is lower than that of the fourth energy storage unit or the fifth energy storage unit.

16. The control device according to any one of claims 9 to 15, wherein the control unit is specifically configured to:
when an undervoltage energy storage unit is present in the energy storage system, charge the undervoltage energy storage unit, wherein a charging priority of the undervoltage energy storage unit is higher than that of the power grid or a non-undervoltage energy storage unit in the energy storage system, and the SOC of the undervoltage energy storage unit is less than or equal to an undervoltage threshold.

17. An energy storage system, wherein the energy storage system is coupled to an energy generation system and a power grid, and the energy storage system comprises a plurality of energy storage units and the control device according to any one of claims 9 to 16.

18. A control device of an energy storage system, wherein the control device comprises a memory and a processor, the memory is configured to store instructions, and the processor is configured to read the instructions and perform the method according to any one of claims 1 to 8 according to the instructions.
